Europäisches Patentamt

European Patent Office

Office européen des brevets

(19)

(11) Veröffentlichungsnummer: **0 184 658**
**B1**

(12) **EUROPÄISCHE PATENTSCHRIFT**

(45) Veröffentlichungstag der Patentschrift:
**01.03.89**

(21) Anmeldenummer: 85113854.5

(22) Anmeldetag: **31.10.85**

(51) Int. Cl.⁴: **F 16 L 47/02**, B 29 C 65/34,
B 29 C 65/02

(54) Verbindungsformstück, insbesondere eines Anbohrsattels.

(30) Priorität: **13.11.84 NL 8403462**

(43) Veröffentlichungstag der Anmeldung:
**18.06.86 Patentblatt 86/25**

(45) Bekanntmachung des Hinweises auf die Patenterteilung:
**01.03.89 Patentblatt 89/9**

(84) Benannte Vertragsstaaten:
**AT BE CH DE FR GB IT LI LU NL SE**

(56) Entgegenhaltungen:
**EP-A- 0 069 020**
**FR-A- 2 139 868**
**FR-A- 2 497 916**
**NL-A- 6 401 292**
**US-A- 3 094 452**

(73) Patentinhaber: **Riesselmann & Sohn, Brandstrasse,
D-2842 Lohne/Riessel (DE)**

(72) Erfinder: **de Jong, Arie, Verdilaan 19, NL-9837 CL Breda
(NL)**

(74) Vertreter: **Jabbusch, Wolfgang, Dr., Elisabethstrasse 6,
D-2900 Oldenburg (DE)**

## Beschreibung

Die Erfindung betrifft ein Verbindungsformstück aus thermoplastischem Kunststoff, insbesondere Anbohrsattel, das mit einem scheibenförmigen Heizelement versehen ist, welches einen spiralförmig verlaufenden Heizdraht hat, durch den, zur Herstellung einer Schweissverbindung zwischen dem Verbindungsformstück und einem mit diesem zu verbindenen Gegenstand, ein elektrischer Strom leitbar ist wobei der den Heizdraht aufweisende Kern mit dem Verbindungsformstück zusammenfügbar ist und der scheibenförmige Kern aus einem Werkstoff besteht, der sich bei Shmelzen mit dem Werkstoff des Verbindungsformstückes vereinigt.

Ein solches Verbindungsformstück ist bekannt aus der europäischen Patentanmeldung EP-A-0 069 020.

Bei dem Verbinden eines Rohres aus thermoplastischem Kunststoff mit einem Verbindungsformstück mittels Schweissen wird häufig von einem Verbindungsformstück Gebrauch gemacht, das mit einem elektrischen Heizelement in Form eines als Spirale gewickelten metallenen Heizdrahtes, der an oder in der Oberfläche des Verbindungsformstückes befestigt worden ist, versehen ist. Während einer vorbestimmten Zeit wird durch den spiralförmigen Heizdraht zur Herstellung einer Schweissverbindung zwischen dem Verbindungsformstück und einem mit diesem zu verbindenen Gegenstand ein elektrischer Strom geleitet. Infolge der Wärmeentwicklung im Heizdraht schmilzt der Werkstoff des Verbindungsformstückes und des mit diesem zu verbindenden Gegenstandes an den einander zugekehrten Oberflächen dieser beiden Teile.

Bei dem nach der EP-A-0 069 020 bekannten Heizelement geschieht das Befestigen des spiralförmigen Heizdrahtes dadurch, dass der Heizdraht in eine Oberfläche einer Scheibe eingebettet wird. Das innere Ende des Heizdrahtes wird umgebogen und von der Oberfläche der Scheibe durch eine drehbare Lippe getrennt über die geformte Spirale geführt, um dieses Ende des Heizdrahtes zur Aussenseite der Spirale zu bringen, so dass beide Enden des Heizdrahtes leicht mit einer elektrischen Spannungsquelle verbunden werden können. Daraus ergibt sich der Nachteil, dass an der Stelle, an der das umgelegte innere Ende des Heizdrahtes und die Spirale einander kreuzen, eine ungleichmässige Erwärmung einander zugekehrter Oberflächen auftritt, wodurch die Qualität der Schweissverbindung stark beeinträchtigt wird.

Der Erfindung liegt die Aufgabe zugrunde, ein Verbindungsformstück der eingangs genannten Gattung in Hinsicht auf die Qualität der herzustellenden Schweissverbindung zu verbessern.

Diese Aufgabe ist dadurch gelöst, dass der Heizdraht dem Verlauf jeweils einer spiralförmigen Rille folgend in beide Oberflächen eines scheibenförmigen Kernes eingebettet ist.

Bei dem erfindungsgemässen Verbindungsformstück ist mit Vorteil jeweils ein Heizdraht in einer der beiden Oberflächen des scheibenförmigen Kernes spiralförmig eingebettet und die beiden Heizdrähte an der Innenseite im Zentrum der Spirale miteinander verbunden. Es ist auch möglich, einen zweiadrigen Draht spiralförmig einzubetten oder einen durchgehenden Heizdraht zunächst in einer Oberfläche des Kernes und dann in der anderen Oberfläche des Kernes einzubetten.

Der Heizdraht kann auch in je einer Oberfläche zweier Scheiben eingebettet werden, die, mit ihren dem Heizdraht gegenüberliegenden Oberflächen aneinander anliegend, zu dem scheibenförmigen Kern zusammengefügt werden.

Es ist möglich, durch die Wahl der Ausbildung und der Art des Einbettens des Heizdrahtes, das Verbindungsformstück an die jeweiligen Heizanforderungen zur Erreichung einer optimalen Schweissverbindung anzupassen. Der Heizdraht kann beispielsweise in blanker oder isolierter Ausführung eingebettet sein, bei spiralförmiger Wicklung des Heizdrahtes können die Wicklungsabstände bzw. die Anzahl der Wicklungen auf den beiden Oberflächen des scheibenförmigen Kernes unterschiedlich ausgeführt sein, es kann der Durchmesser des Heizdrahtes variiert werden, wobei dür die Belegung der beiden Oberflächen des scheibenförmigen Kernes Heizdrähte unterschiedichen Durchmessers verwendet werden können und die Spiralen aus Heizdraht können z.B. wahlweise links- oder rechtsdrehend gelegt werden.

Bei allen möglichen Ausbildungsformen des erfindungsgemässen Verbindungsformstückes ist jedoch mit Vorteil der scheibenförmige Kern an seinen beiden Oberflächen mit einem Heizdraht belegt, wodurch eine gleichmässigere und vollständigere Aufschmelzung des scheibenförmigen Kernes und der an den Kern angrenzenden Oberflächen des Verbindungsformstückes bzw. des mit dem Verbindungsformstück zu verbindenden Gegenstandes zur Herstellung einer dauerhaften und qualitativ hochwertigen Schweissverbindung möglich ist.

Die Grösse der geformten Spirale mit eingebettetem Heizdraht ist abhängig von der Grösse der mit der Schweissverbindung zu versehenden Oberfläche des Verbindungsformstückes und des mit dem Verbindungsformstück zu verbindenden Gegenstandes. Dies hat zur Folge, dass je nach der Grösse dieser Spirale verschiedene Leistungen nötig sind, um eine taugliche Schweissverbindung zustande zu bringen. Gemäss der EP-A-76 043 ist eine Elektroschweissarmatur zum Verbinden von thermoplastischen Kunststoffrohren mit einem Heizdraht und einem in Serienschaltung mit dem Heizdraht verbundenen Hilfswiderstand versehen. Ein elektisches Kontroll-Dosiergerät wird zur Bestimmung des Gesamtwiderstandswertes des Heizdrahtes und des Hilfswiderstandes mit der Elektoschweissarmatur verbunden, um für eine, dem gemessenen Gesamtwiderstand entsprechende, automatisch eingestellte Zeitdauer einen elektrischen Strom durch den Heizdraht zu leiten, wobei vorausgesetzt wird, dass ein bestimmter Gesamtwiderstandswert eine bestimmte Zeitdauer vorgibt. Diese Methode einer Widerstandsmessung ist wenig genau für ein universelles System mit automatischer Zeiteinstellung in bezug auf den gemessenen Widerstandswert, weil Elektroschweissarmaturen verschiedener Herkunft ganz verschiedene Widerstandswerte für die Heizdrähte bei gleicher Ausdehnung der Verbindungsformstücke beinhalten, wobei die Toleranz der spezifischen Widerstände von diesen Heizdrähten wesentlich differieren können, woraus unterschiedliche Widerstandswerte resultieren.

Um hierin Abhilfe zu schaffen, ist bei dem erfindungsgemässen Verbindungsformstück zum Zwecke der automatischen Abwicklung des Schweissens ein Hilfswiderstand vorgesehen, der ebenso wie der Heizdraht über getrennte Leiter mit dem elektrischen Kontroll-Dosiergerät verbunden ist. Der Widerstandswert dieses Hilfswiderstandes ist jetzt unabhängig des Widerstandes im Heizdraht genau zu bestimmen und dann bei jedem Herstellungssystem eines erfindungsgemässen Verbindungsformstückes verwendet werden, ausgehend von der Voraussetzung, dass ein bestimmter Widerstandwert des Hilfswiderstandes, der beispielsweise 100 Ohm oder weniger bis 10 000 Ohm oder mehr beträgt, einer vorausbestimmten Schweisszeit in Sekunden, z.B. von 10 Sekunden oder weniger bis 600 Sekunden oder mehr, entspricht. Der Hilfswiderstand kann sowohl während als auch nach dem Ausformen des Verbindungsformstückes angebracht werden.

Bei einer bevorzugten Ausführung ist der Hilfswiderstand mit einer schützenden Umhüllung versehen und mit Hilfe von Anschlussstiften am Verbindungsformsstück befestigt. Abhängig von den Toleranzen des spezifischen Widerstandes und des Durchmessers des Drahtes, aus dem der Heizdraht hergestellt ist, kann nach der Bestimmung des Widerstandswertes des Heizdrahtes des Verbindungsformstückes die Schweisszeit, die benötigt wird, um die gewünschte Leistung zuführen zu können, berechnet werden, und demgemäss wird der richtige Hilfswiderstand mit entsprechendem Widerstandswert an dem Verbindungsformstück angebracht, der dann während des Schweissens dafür Sorge trägt, dass mittels des elektrischen Kontroll-Dosiergerätes die benötigte Energie während der vorbestimmten Zeit zugeführt wird, wodurch mit Vorteil der Ausschuss von hergestellten Schweissungen auf ein Minimum reduziert werden kann.

Um während des Schweissens von Verbindungsformstücken den Schweissvorgang visuell beurteilen zu können, ist mit Vorteil im Verbindungsformstück an einer willkürlichen Stelle, die hierfür in Betracht kommt, vorzugsweise eine Vertiefung angebracht, deren Wand oder deren Boden teilweise mit dem Heizdraht in Berührung kommt und in die ein passend ausgebildeter, markierter Stift lose eingesteckt ist, der aus einem anderen Werkstoff gefertigt ist als das Verbindungsformstück. Der markierte Stift dient nun mit Vorteil als eine visuelle Kontrolle der Qualität der Schweissverbindung während des Schweissens, da infolge der thermischen Ausdehnung des schmelzenden Werkstoffes ein Überduck entsteht und der schmelzende Werkstoff, einen Ausweg suchend, in die Vertiefung entweicht und dabei den losen Stift nach aussen anhebt. Das Ausmass, in dem dies geschieht, ist an der nach aussen vorragenden Markierung abzulesen und ist ein Mass für die Qualität der hergestellten Schweissung, denn der Hubweg des markierten Stiftes ist abhängig von der Menge des geschmolzenen Werkstoffes, durch die die Ausdehnung der Verschmelzungszone und damit die Dauerhaftigkeit der Schweissverbindung zwischen dem Verbindungsformstück und dem mit diesem zu verbindenden Gegenstand bestimmt wird.

Ausführungsbeispiele, aus denen sich weitere erfinderische Merkmale ergeben, sind in der Zeichnung dargestellt. Es zeigen:

Fig. 1a eine Draufsicht auf einen scheibenförmigen Kern mit spiralförmigem Heizdraht,

Fig. 1b einen Querschnitt des scheibenförmigen Kernes gemäss Fig. 1a,

Fig. 1c eine Unteransicht eines scheibenförmigen Kernes,

Fig. 2a einen Längsschnitt eines Anbohrsattels, in dem ein scheibenförmiger Kern mit Heizdraht in gebogener Form angebracht ist und der mit Anschussstiften, einem Hilfswiderstand und mit einer zylinderförmigen Vertiefung mit losem Stift versehen ist und

Fig. 2b einen Querschnitt des Anbohrsattels gemäss Fig. 2a.

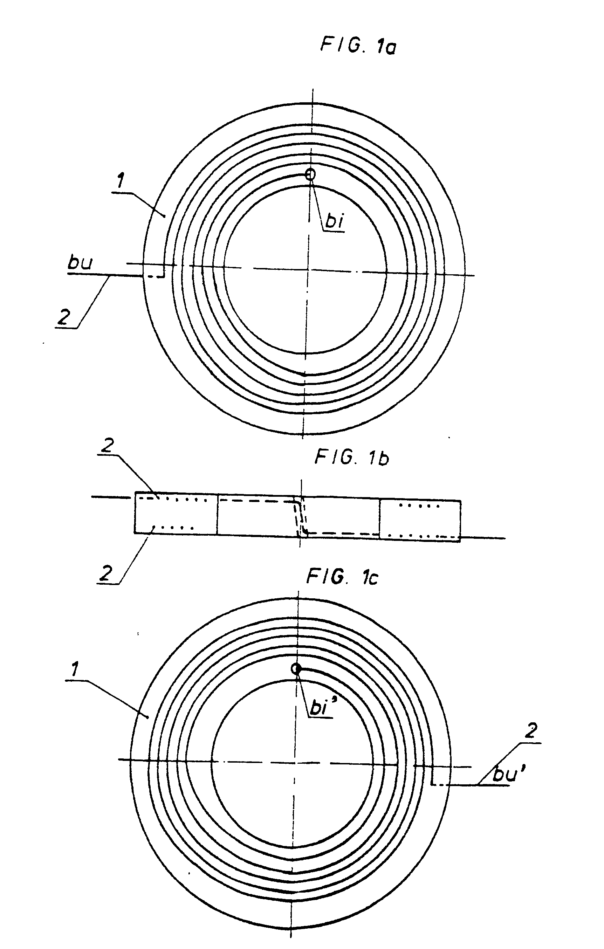

In Fig. 1 ist ein scheibenförmiger Kern 1 dargestellt, in dessen beiden Oberflächen ein spiralförmiger Heizdraht 2 eingebettet ist. Im Zentrum des spiralförmigen Heizdrahtes 2 werden die inneren Enden bi, bi' des Heizdrahtes 2 miteinander verbunden, so dass beim Anschliessen einer elektrischen Spannungsquelle der Strom von einem äusseren Ende bu der Heizdrahtes zum anderen äusseren Ende des Heizdrahtes bu' fiessen kann. Die Steigung der spiralförmigen Wicklung des Heizdrahtes wird je nach Heizanforderung gewählt, wobei der spiralförmige Heizdraht 2 zehn oder weniger bis dreissig oder mehr Windungen erhält.

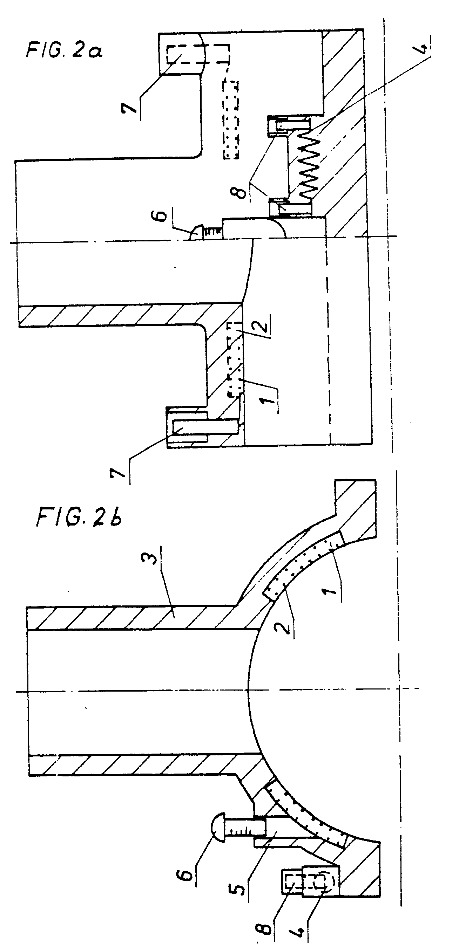

In Fig. 2a,b wird ein Heizelement, bestehend aus einem scheibenförmigen Kern 1 mit Heizdraht 2 versehen und mit Anschlussstiften 7 soweit gebogen, dass der Biegeradius mit dem Radius eines zu formenden Verbindungsformstückes 3 übereinstimmt und als Einsatzstück in der Pressoder Giessform plaziert. Nach der Fertigung des Verbindungsformstückes 3 bildet das Heizelement, dessen scheibenförmiger Kern aus einem Werkstoff ist, der sich mit dem Werstoff des Verbindungsformstückes 3 verbindet, ein Ganzes mit dem geformten Verbindungsformstück 3. Bei einem anderen Ausführungsbeispiel wird im Verbindungsformstück 3 nach Fig. 2a,b eine Vertiefung freigehalten, in die das Heizelement nach Fertigstellung des Verbindungsformstückes 3 nachträglich eingesetzt wird.

In Fig. 2a,b ist auch ein Hilfswiderstand 4 dargestellt, der mit Anschlussstiften 8 versehen ist, welche bei Ausformen des Verbindungsformstükkes 3 an geeigneter Stelle im Verbindungsformstück 3 aufgenommen oder nach der Herstellung des Verbindungsformstückes 3 komplett als Ganzes, bestehend aus Hilfswiderstand 4 mit Anschlussstiften 8, umgeben von einer schützenden Umhüllung am Verbindungsformstück angeordnet werden.

In Fig. 2a,b ist auch eine Vertiefung 5 dargestellt, die mittels eines geeignet ausgebildeten Stiftes, dessen Querschnitt rund, oval, viereckig oder beliebig anders ausgeformt sein kann, während des Ausformens des Verbindungsformstükkes 3 in das Verbindungsformstück 3 eingebracht wird, dargestellt. Nach dem Ausformen des Verbindungsformstückes 3 wird in diese Vertiefung 5 ein passend ausgebildeter markierter Stift 6 lose eingesetzt. Nötigenfalls kann das Verbindungsformstück 3 auch mehrere Vertiefungen 5 mit passenden, markierten Stiften 6 aufweisen.

## Patentansprüche

1. Verbindungsformstück aus thermoplastischem Kunststoff, insbesondere Anbohrsattel, das mit einem scheibenförmigen Heizelement (1) versehen ist, welches einen spiralförmig verlaufenden Heizdraht (2) hat, durch den, zur Herstellung einer Schweissverbindung zwischen dem Verbindungsformstück und einem mit diesem zu verbindenden Gegenstand, ein elektrischer Strom leitbar ist, wobei der den Heizdraht (2) aufweisende Kern (1) mit dem Verbindungsformstück (3) zusammenfügbar ist und der scheibenförmige Kern (1) aus einem Werkstoff besteht, der sich bei Schmelzen mit dem Werkstoff des Verbindungsformstückes (3) vereinigt, dadurch gekennzeichnet, dass der Heizdraht (2) dem Verlauf jeweils einer spiralförmigen Rille folgend in beiden Oberflächen eines scheibenförmigen Kernes (1) eingebettet ist.

2. Verbindungsformstück nach Anspruch 1, dadurch gekennzeichnet, dass der Heizdraht (2) in je eine Oberfläche zweier Scheiben eingebettet ist, die an ihren dem Heizdraht (2) gegenüberliegenden Seiten aneinander anliegend zu dem scheibenförmigen Kern (1) zusammengefügt sind.

3. Verbindungsformstück nach Anspruch 1 oder 2, dadurch gekennzeichnet, dass es mit einem Hilfswiderstand (4) versehen ist, dessen Widerstandswert als Parameter der Zeit, die vor dem Schweissen automatisch eingestellt wird, vorwählbar ist und dass die Vorwahl und die Regelung des Widerstandswertes und der Zeit mittels eines hierzu geeigneten elektrischen Kontroll-Dosiergerätes regelbar ist, das zwischen einer elektrischen Spannungsquelle und dem Verbindungsformstück mittels getrennter Leiter mit dem Heizdraht (2) und dem Hilfswiderstand (4) angeordnet ist.

4. Verbindungsformstück nach einem der vorhergehenden Ansprüche, dadurch gekennzeichnet, dass es mit einer Vertiefung (5) versehen ist, in die ein passend ausgebildeter, markierter Stift (6) lose einsteckbar ist, dass diese Vertiefung (5) zum Heizdraht (2) beliebig benachbart angeordnet ist und dass der markierte Stift (6) aus einem anderen Werkstoff besteht als das Verbindungsformstück (3).

## Revendications

1. Piece moulée raccord en matière synthétique thermoplastique, en particulier piquage, pourvue d'un élément de chauffage (1) en forme de disque qui comporte un fil chauffant (2) enroulé en spirale à travers lequel on peut faire passer un courant électrique pour réaliser un assemblage soudé entre la pièce moulée de raccord et un objet à assembler à celle-ci, le noyau (1) comportant le fil chauffant (2) pouvant être assemblé à la pièce moulée de raccord (3) et le noyau (1) en forme de disque étant réalise dans un matériau qui à la fusion, s'unit au matériau de la pièce moulée de raccord (3), caractérisée en ce que le fil chauffant (2) qui suit le parcours d'une rainure en spirale, est noyé dans les deux faces d'un noyau (1) en forme de disque.

2. Pièce moulée de raccord selon la revendication 1, caractérisée en ce que le fil chauffant (2) est noyé dans une des surfaces de chacun des deux disques qui sont assemblés, appliqués l'un contre l'autre, sur leurs faces opposées au fil chauffant (2), pour former le noyau (1) en forme de disque.

3. Pièce moulée de raccord selon la revendication 1 ou 2, caractérisée en ce qu'elle est pourvue d'une résistance auxiliaire (4) dont la valeur de résistance peut être pré-sélectionnée comme un paramètre du temps qui est automatiquement réglé avant le soudage, et en ce que la présélection et le réglage de la valeur de la rèsistance et du temps est réglable au moyen d'un doseur de contrôle électrique approprié à cet effet, lequel est disposé, avec le fil chauffant (2) et la résistance auxiliaire (4), entre une soucre de tension électrique et la pièce moulée de raccord, au moyen de conducteurs séparés.

4. Pièce moulée de raccord selon l'une des revendications précédentes, caractérisée en ce qu'elle est pourvue d'un creux (5) dans lequel peut être enfoncée librement une broche (6) portant des marques, convenablement conçue, en ce que ce creux est disposé aussi près qu'on le souhaite du fil chauffant (2) et en ce que la broche (6) portant des marques est réalisée dans un matériau différent de celui de la pièce moulée de raccord (3).

## Claims

1. Shaped connecting part, in particular a boring saddle, which is made of thermoplastic synthetic material and which is provided with a disk-shaped heating element (1) which has a resistance wire (2) which extends in spiral shape and through which an electric current is conductable in order to manufacture a weld joint between the shaped connecting part and an object to be connected with this, wherein the core (1) which has the heating element (2) is capable of being connected together with the shaped connecting part (3), and the disk-shaped core (1) is made from a material which, on melting, fuses with the material of the shaped connecting part (3), characterized in that the resistance wire (2), following in each case a spiral-shaped channel, is embedded into both surfaces of a disk-shaped core (1).

2. Shaped connecting part according to Claim 1, characterized in that the resistance wire (2) ist embedded into a surface of each of two disks which, on their opposite sides to the resistance wire (2), are connected together with the disk-shaped core (1), adjacently to each other.

3. Shaped connecting part according to Claim 1 or 2, characterized in that it is provided with an auxiliary resistance (4) whose resistance value can be pre-selected as a parameter of the time which is automatically set before welding, and in that the pre-selection and the regulating of the resistance value and of the time can be regulated by means of an electric control-metering-machine suitable for this purpose, this latter being arranged, by means of separate wires, with the resistance wire (2) and the auxiliary resistance (4), between an electric power source and the shaped connecting part.

4. Shaped connecting part according to one of the preceding Claims, characterized in that it is provided with a cavity (5) into which an appropriately designed, marked pin (6) is loosely insertable, in that this cavity (5) is arranged anywhere adjacent to the resistance wire (2), and in that the marked pin (6) consists of a material different from that of the shaped connecting part (3).

1|2

FIG. 1a

FIG. 1b

FIG. 1c

FIG. 2a

FIG. 2b